# EUROPEAN PATENT APPLICATION

(11) **EP 1 226 884 A2**
(43) Date of publication of application: **31.07.2002**
(21) Application number: 01129730.6
(22) Date of filing: 13.12.2001
(51) Int. Cl.: B09C 1/10

(54) **Decontamination bag for soil**

(30) Priority: 28.12.2000 JP 2000400440
(71) Applicant: Tanaka Sangyo Co., Ltd., Toyonaka, Osaka (JP)
(72) Inventor: Taniguchi, Mitsunori, Toyonaka, Osaka (JP)
(74) Representative: Hering, Hartmut, Dipl.-Ing.

(57) **Abstract**

The present invention provides a newly decontamination bag for soil as used in purifying soil by oil-eating bacteria.

Said decontamination bag for soil is comprised of a cylindrical body (1) made with porous materials and a lid (2) being openable to said body. Said lid (2) is made with materials having water proofing property and moisture permeability. A means for inserting soil with lipophilia bacteria therein to said bag is adopted. Also, a lid (1) which has an eaves (5) by setting a diameter thereof lager than that of said body (1), is adopted. Further, a decontamination bag for soil, the whole of which is made with the same material with said lid (2), is adopted.

## Description

The present invention relates to a decontamination bag for soil that is used in purifying soils contaminated by oil or the like on old sites of oil refineries or oil related factories, in a manner of filling contaminated soils into said bag to purify and to recycle said soils utilizing lipophilia bacteria.

In view of streamlining management, an oil industry has recently proceeded to integrate and/or close down excessive oil refineries and gas stands. However, sites of old oil refineries or gas stands are contaminated by heavy oil and therefore difficult to recycle or sell.

As a manner of purifying oil-contaminated soils, to replace with pure soils by digging the ground and cleansing and burning contaminated soils have been considered as conventional. However, these contaminated soils are required to be processed as industrial waste and moreover, great cost and time are necessary in discussed manners.

In recent time, a manner of activating oil-eating lipophilia bacteria in the ground to resolve oil seeped into the ground and to resume clean soil is being adopted. In this case, the amount of moisture and air in the ground has to be regulated for bacteria to react in a preferable condition. In a conventional way for regulating moisture, all surface of the ground to be purified is covered with a high-density polyethylene cover to keep out water such as rain and snow from outside environment. While the above cover prevents water permeation, activity of said lipohilia bacteria is hampered since said cover also prevents air permeation at the same time. Therefore, an air pipe set under said cover for supplying sufficient oxygen for bacteria has been used in a conventional way, which still needs a great deal of cost and time. On the other hand, a decontamination bag which is designed to purify contaminated soils effectively with many bags by processing in small amount has not been suggested.

In view of the above situation, the present invention, which is used in a manner of filling a number of bags with contaminated soils with oil-eating bacteria activating therein, provides a new decontamination bag for soil in purifying soil utilizing oil-eating bacteria.

The present invention adopted a decontamination bag for soil comprising of a cylindrical body that is made of a porous material and that has the bottom, and a lid for said body that is openable and closable. Said lid made of material that permeates vapor but does not permeate waterdrops has both water proofing property and moisture permeability. A means for adding soils that include lipophilia bacteria is also adopted.

Since raindrops will not leak in said bag due to water proofing property of a lid when raining and a preferable condition for oil-eating bacteria to activate in soils can be maintained due to the entire moisture permeability and vapor permeability, a decontamination bag for soil having above structure advantages purification of contaminated soils. Also, a shape of the present invention is bag-like making no difficulty to decide a place to store.

The invention in claim 2 adopts a lid, diameter of which is larger than that of an opening portion of said decontamination bag for soil, to create an eaves with a protruding portion. With said eaves, a leak of waterdrops can be prevented in the case of large precipitation.

The invention in claim 3 adopts a body, material of which is the same as a lid and has water proofing property and moisture permeability. Since a decontamination bag for soil having the above structure can prevent waterdrops from leaking in said bag in any outside environments, a preferable condition for oil-eating bacteria to activate can be maintained.

### BRIEF DESCRIPTION OF THE DRAWINGS

Fig 1 is a perspective view showing an embodiment of a decontamination bag for soil in the present invention.
Fig 2 is a perspective view showing another embodiment of a decontamination bag for soil with a different size of a lid.

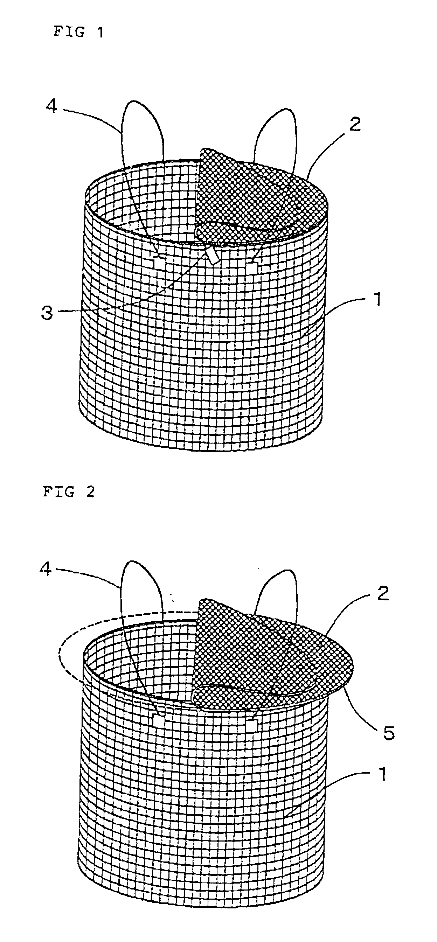

Hereafter, preferred embodiments of a decontamination bag for soil in the present invention is discussed referring to the drawings. Fig 1 is the first embodiment of the present invention, In this figure, 1 is a cylindrical body that is made of porous material and has the bottom, 2 is a lid that is openable and closable to said body, 3 is a zipper that fasten or unfasten said body 1 and said lid 2, and 4 is a pair of strings that are provided outside surface of said body 1.

As a specific composition, said body 1 is made from material such as natural fiber or synthetic resin fiber having relatively fine meshes, whereby porousness to keep airflow and to prevent soils from coming out from said meshes can be obtained. Said lid 2 is made of synthetic resin fiber having vastly fine meshes such that a raindrop with a diameter larger than a size of said mesh cannot permeate and moisture with a diameter smaller than a size of said mesh can permeate. Said lid material has the same porousness to keep airflow as said body 1. Specifically, a material, which is made by laminating prescribed material on a polytetraflourethlene film, such as Gore-Tex (trademark) is suitable.

A material used for said lid 2, which is consisted of meshes finer than that of said body 1, can be adopted for said body 1. Therefore, the whole decontamination bag for soil may be made of material such as said Gore-Tex having water proofing property and moisture permeability.

Since said Gore-Tex is weak in terms of oil-resistance in some cases, a material thereof should be protected by providing, for example, a polyamides sheet at a soil touching side to avoid direct contact with soils. In this case, flows of air and moisture will not stem and moreover, leakage of water in forms of raindrops or snow from outside can be prevented. Also, geotextile of non-textile fabric may be spread on the surface of soils. The above measures are mainly to prevent Gore-Tex from being contaminated by soil and in consequence will extend the life of Gore-Tex.

As a manner of purifying contaminated soils, a moderate amount of contaminated soils and nourishments are put in a decontamination bag for soil having the above structure and then said bag is left outside for a long span of time while activating oil-eating lipophilia bacteria. In said time, contaminated soils are purified by oil-eating bacteria resolving oil in said soils. Therefore, keeping a suitable amount of oxygen and water is preferable for activity of oil-eating bacteria.

According to a structure of the present invention, in the case that a decontamination bag for soil is left in an open air when it fines, activity of oil-eating bacteria is advanced with sufficient oxygen and a suitable amount of water in soils that are supplied through moisture permeability of said body 1. Also, in the case that said bag is exposed to waterdrops when it rains, a regular amount of water in soils can be maintained since a lid prevents raindrops from passing through thereof and excessive water will not leak into said soils. Accordingly, oil-eating bacteria can be activated under a preferable condition without being influenced by weather.

Said lid 2 may be provided as being openable and closable having the same diameter as said opening portion of said body 1 as shown in Fig 1. On the other hand, as shown in Fig 2, said lid 2 may be provided having a diameter larger than that of said opening portion to form an eaves 5. In this case, said opening portion is covered amply with said eaves 5 even when it has a great deal of rainfall and/or rains diagonally due to the wind.

In each embodiment discussed above, a means for opening and closing said lid 2 is not limited to said zipper 3. Therefore, strings or hooks which are both well-known means, may be adapted. Also, said body 1 may have an emitting portion therein to emit purified soils from the lower position thereof. As a structure of said emitting portion, a means for providing a zipper or a chrysanthemum-like bottom member which are both well-known, may be adapted.

As described above, since a decontamination bag for soil in the present invention at least includes a lid which is made of material having water proofing property and moisture permeability, water will not leak into said bag when raining. Therefore, said decontamination bag for soil can keep a preferable condition for oil-eating bacteria to activate and advance purifying contaminated soils. Also, as contaminated soils are processed after divided into portable bags, a user may have no difficulty to decide where to store said bag and can move said bag swiftly in accordance with a weather change.

A decontamination bag for soil, wherein only a lid is made with materials having water proofing property and moisture permeability, is preferably preserved in a place with a roof. However, in the case that the whole bag is made with the mentioned materials, water cannot leak into said bag even when said bag is put at open-air space. Therefore, said bag can be placed anywhere and capable to purify contaminated bag in various environment.

## Claims

1. A decontamination bag for soil comprising:
a cylindrical body (1) that is made of a porous material and that has the bottom,
an openable lid (2) for said body,
and said lid (2) is made of a material that does not permeate waterdrops but does vapor and that attains both water proofing and moisture permeability
and developed by adding contaminated soils with lipophilia bacteria into said bag.

2. A decontamination bag for soil according to claim 1, wherein diameter of said lid is larger than that of an opening portion of a decontamination bag to create an eaves with a protruding portion.

3. A decontamination bag for soil according to claim 1 or 2, wherein said body (1) is made of the same material as said lid (2).

4. A decontamination bag for soil according to claim 1, wherein said lid (2) is openable to a body with a zipper (3).

5. A purifying method for contaminated soil developed with
a bag comprising of a cylindrical body (1) that is made of porous material and has the bottom, an openable and closable lid (2) for said body made of material permeating vapor but not waterdrops that has both water proofing property and moisture permeability,
oil-contaminated soil and lipophilia bacteria blended therewith,
and said soil put and kept in said bag for a certain period of time.
